# EUROPEAN PATENT SPECIFICATION

(11) **EP 3 477 747 B1**
(45) Date of publication and mention of the grant of the patent: **06.05.2020**
(21) Application number: 17401101.5
(22) Date of filing: 21.09.2017
(51) Int. Cl.: H01M 4/139, H01M 4/04, H01M 4/525, H01M 4/62, H01M 10/0525, H01M 10/054

(54) **ELECTRODE MATERIAL FOR LITHIUM-ION BATTERIES AND METHOD FOR PREPARING SAME**
ELEKTRODENMATERIAL FÜR LITHIUM-IONEN-BATTERIEN UND VERFAHREN ZUR HERSTELLUNG DAVON
MATÉRIAU D'ÉLECTRODE POUR BATTERIES AU LITHIUM-ION ET SON PROCÉDÉ DE PRÉPARATION

(43) Date of publication of application: 01.05.2019
(73) Proprietor: Karlsruher Institut für Technologie, 76131 Karlsruhe (DE)
(72) Inventor: Bresser, Dominic, 89073 Ulm (DE); Passerini, Stefano, 89073 Ulm (DE); Künzel, Matthias, 89081 Ulm (DE)

(56) References cited:
- WO-A1-2010/086558
- DE-A1-102013 111 826
- JIANGXUAN SONG ET AL: "Advanced Sodium Ion Battery Anode Constructed via Chemical Bonding between Phosphorus, Carbon Nanotube, and Cross-Linked Polymer Binder", ACS NANO, vol. 9, no. 12, 22 December 2015 (2015-12-22), pages 11933-11941, XP055430548, US ISSN: 1936-0851, DOI: 10.1021/acsnano.5b04474

## Description

The share of lithium-ion batteries (LIBs) to the worldwide battery market strongly increased throughout the past two decades and is expected to grow even more rapidly with the mass market introduction of electric vehicles in the near future. Thus, the environmental impact of this technology becomes an increasingly important concern for present and future developments. The two primary approaches for the transition towards more sustainable lithium-ion batteries, particularly addressing the cathode side, are, firstly, the exclusion of cobalt, rated as an economically critical material, and, secondly, the replacement of the presently used poly(vinylidene difluoride) (PVdF) as binder, which requires the use of toxic and environmentally harmful N-methyl-2-pyrrolidone (NMP) as dispersion solvent. A promising approach towards cobalt-free cathode materials is the replacement of the commonly employed LiCoO₂ (LCO) and Li[Ni_{1/3}Co_{1/3}Mn_{1/3}]O₂ (NCM) by high-voltage spinel oxides like LiNi_{0.5}Mn_{1.5}O₄ (hereinafter named LNMO). Its high operating voltage, exceeding 4.7 V, allows for the achievement of similar or even enhanced energy densities compared to current lithium-ion cells based on LCO or NCM while avoiding the use of cobalt. However, most of the reports regarding LNMO cathodes involve the implementation of PVdF-based binders, including the aforementioned utilization of highly volatile and toxic NMP as dispersant/solvent, resulting in severe concerns for human health and the environment. Moreover, after the coating process NMP is removed by heating and must be recovered *via* expensive and energy consuming equipment. For standard anode materials as, for instance, graphite, the substitution of PVdF by watersoluble binders, usually a mixture of carboxymethyl cellulose (CMC) and styrene-butadiene rubber (SBR), has been well established already, leading to a safe, cheap, and environmentally friendly process. In contrast, the aqueous processing of oxide-based cathode materials appears to be significantly more complicated due to the high sensitivity of these lithium transition metal oxides towards water. Already in 1987, Manthiram and Goodenough^{[1]} described the leaching of lithium ions from layered transition metal oxides upon exposure to moisture, which was later on found to occur also for many other cathode materials including LNMO.^{[2,3]} Generally, all these transition metal oxides form LiOH in contact with water, which does not only lead to a decrease of the electrochemically available lithium, but moreover has a detrimental impact on the electrode/electrolyte interface chemistry and, thus, eventually on the overall reversible capacity and cycling stability. ^{[2,3]} At least as important, is the detrimental effect of the harsh pH increase ascribed to the hydroxide formation, leading to another major issue associated with the aqueous processing of transition metal oxide based cathode slurries: the corrosion of the aluminum current collector substrate according to **Equations 1** and **2:**^{[4]}

Al₂O₃ + 2 OH⁻ + 3 H₂O → 2 [Al(OH)₄]⁻ **(1)**

2 Al + 2 OH⁻ + 6 H₂O → 2 [Al(OH)₄]⁻ + 3 H₂ **(2)**

The dramatic increase of the pH level of the slurry in contact with water, i.e., above 11, initiates the breakdown of the passivating (protective) alumina surface layer (**Eq. 1**) and leads to the formation of fast-growing corrosion pits, penetrating deeply into the current collector accompanied by H₂ evolution (**Eq. 2**). One strategy to overcome this problem is the prevention of the direct contact between the aluminum surface and the corrosive slurry, for instance, by applying a protective carbon coating on the aluminum foil.^{[4]} Nonetheless, beside adding inactive mass and volume to the battery, potential defects in the carbon coating may still serve as starting sites for pitting corrosion. Also, this approach does not really address the issue at its origin, but instead addresses the detrimental effects. Another approach, addressing the pH increase itself, is the addition of mild (organic) acids as, e.g., formic acid to adjust the slurry pH to a more moderate value, i.e., within the aluminum passivation regime. Nevertheless, Li⁺ leaching still occurs and might even be enforced through the superficial attack of the acid, causing transition metal dissolution and reducing the accessible capacity of the cathodes.^{[5]} Very recently, it was reported for NMC that these unfavorable side effects can be mitigated by using phosphoric acid to reduce the slurry pH. In fact, a protective metal phosphate layer was formed on the particle surface *in situ,* i.e., upon electrode preparation and without applying an additional processing step, which stabilizes the electrode/electrolyte interface and reduces lithium and transition metal dissolution.^{[6]} Considering manganese-based spinel oxides, this surface stabilization is, potentially, even more important since it may reduce the impact of manganese disproportionation upon discharge (i.e., when Mn³⁺ is present) and the resulting Mn²⁺ dissolution and Jahn-Teller distortion.

Another issue when targeting the aqueous electrode processing for lithium-ion cathodes, in particular those operating at elevated potentials, is the incorporation of styrene butadiene rubber (SBR), which is commonly added for aqueous processed graphite anodes in order to enhance the mechanic stability of the electrode and the adhesion properties of the coating layer. While these rubbers are usually very stable towards reduction, their stability towards oxidation is rather limited, which is especially an issue for high-voltage LNMO cathodes. Hence, SBR cannot be used to beneficially complement the binding ability of CMC in this case. A very recent study suggested the partial crosslinking of CMC using citric acid (CA) as crosslinking agent for low-voltage sulfur-based cathodes, ^{[7]} following a concept earlier proposed by Wang et al. to firmly bind CMC to hybrid phosphorus-carbon nanotube composites for sodium-ion anodes.^{[8]}

WO2010086558 A1 teaches methods for preparing electrode compositions wherein carboxymethylcellulose is used as a binder.

The main object of the present invention is to provide an electrode material for lithium-ion batteries and a method for preparing the same, which overcomes the limitations and drawbacks known from the state of the art.

In particular it is an object of the present invention to provide an electrode material for a lithium-ion battery with a high cycling stability and a high electrochemical efficiency and performance.

A further object of the present invention is to provide a method of preparing such electrode material, which is easy to carry out and possible to be performed in water without using toxic chemicals.

The solution of this problem is provided by a method for preparing an electrode material for lithium-ion batteries according to claim 1, a method for preparing an electrode for lithium-ion batteries according to claim 11, an aqueous dispersion for preparing an electrode material for lithium-ion batteries according to claim 12, an electrode according to claim 14 and a lithium-ion battery according to claim 15. The dependent claims describe preferred features.

The present invention relates to a method for preparing an electrode material for lithium-ion batteries comprising the process steps of
a) preparing an aqueous solution of an alkali metal cellulose derivate comprising at least one hydroxyl and/or at least one carboxylate group per repeating unit or an alkali metal alginate, preferably carboxymethyl cellulose (CMC),
b) adding an organic multicarboxylic acid at least an organic dicarboxylic acid to the aqueous solution,
c) adding phosphoric acid (H₃PO₄) or diphosphoric acid (H₄P₂O₇) or triphosphoric acid (H₅P₃O₁₀) or a mixture thereof to the aqueous solution, preferably phosphoric acid (H₃PO₄),
d) adding a conductive additive and an active material comprising lithium and
e) extracting the obtained slurry.

The term "phosphoric acid" used in the specification means phosphoric acid H₃PO₄ or diphosphoric acid (H₄P₂O₇) or triphosphoric acid (H₅P₃O₁₀) or a mixture thereof. If phosphoric acid is meant, than it is followed by the formula H₃PO₄.

In a particular embodiment the alkali metal is lithium or sodium.

In a preferred embodiment the electrode is a cathode.

In a preferred embodiment the organic multicarboxylic acid is taken from the list malonic acid, succinic acid, glutaric acid, aconitic acid, citric acid, propane-1,2,3-tricarboxylic acid, or biphenyl-3,3',5,5'-tetracarboxylic acid, preferably citric acid.

In a preferred embodiment the conductive additive is conductive carbon or a metal, preferably conductive carbon.

In a preferred embodiment the active material comprising lithium is a transition metal oxide, preferably LiNiₓMn₂₋ₓO₄ with x ≤ 0.5 or LiNiₓCo_{y}Mn_{z}M_{q}O2 or Li₂MnO₃^{∗}LiNiₓCo_{y}Mn_{z}M_{q}O₂ with x ≤ 1, y ≤ 1, and z ≤ 1; q ≤ 0.2; x + y + z + q = 1 and M = Al, B, Mg, Ca, Ti, Cr, V, Fe, Cu, Zn, Zr, Nb.

In a further embodiment the ratio from the alkali metal cellulose derivate to the organic multicarboxylic acid is in the range of 7:3 to 99:1, preferably 9:1.

The present invention concerns furthermore a method for preparing an electrode for lithium-ion batteries comprising the steps
A) preparing a slurry
B) depositing the slurry on a current collector to obtain an electrode
C) drying the electrode.

In a preferred embodiment the drying temperature during step C) was between 120°C and 170°C.In a further embodiment the drying temperature is applied first at a lower temperature preferably at 120°C and subsequently at a higher temperature preferably in the range of 140°C to 150°C. In a further embodiment the temperature was applied for 16 h, or for 14 h at the first lower temperature and 2 h at the subsequent higher temperature.

During step C), where the electrode is dried, the crosslinking of the alkali metal cellulose derivate, comprising at least one hydroxyl and/or at least one carboxylate group per repeating unit, or the alkali metal alginate via the organic multicarboxylic acid occurs. This crosslinking occurs at higher temperature starting from around 150°C, while the crosslinking via phosphoric acid potentially occurs at lower temperature starting from around 100°C. To avoid the crosslinking via phosphoric acid, the phosphoric acid is added and dispersed together with the active material in the aqueous solution and moreover in a well-defined content as a function of the overall surface area of the electrode active material, so that the phosphoric acid forms a metal phosphate surface layer. As the content of phosphoric acid is well defined, there is no more phosphoric acid free to compete against the organic multicarboxylic acid in the drying step.
Therefore it is not obvious to combine the use of both types of acids in the same process, as the crosslinking reactions via both types of acid are competitive.

The present invention relates also to an aqueous dispersion for preparing an electrode material for lithium-ion batteries, comprising an active material comprising lithium, a conductive additive, phosphoric acid (H₃PO₄) or diphosphoric acid (H₄P₂O₇) or triphosphoric acid (H₅P₃O₁₀) or a mixture thereof, an organic multicarboxylic acid and an alkali metal cellulose derivative or alkali metal alginate as a binder.

The present invention relates eventually to an electrode for lithium-ion batteries, prepared by the present method as well as to a lithium-ion battery comprising an electrode prepared by the present method.

The preferred embodiments for the method are also valid for the aqueous dispersion.

A lithium-ion cell comprising the present cathode material shows surprisingly an increased capacity and efficiency and enhanced cycling stability especially over at least 100 cycles.

The advantage of the present invention is an improved cathode performance. The addition of phosphoric acid inhibits the aluminum corrosion and stabilizes the active material/electrolyte interface by forming a metal phosphate surface layer, while the crosslinking of the cellulose derivative via the organic multicarboxylic acid leads to an enhanced cycling stability. Most importantly, both approaches do not require any additional processing step, as the thermally induced crosslinking just like the formation of the metal phosphate surface layer can be realized in situ upon standard aqueous electrode processing using the cellulose derivative as binder. It is anticipated that this will allow for a facile implementation of both approaches in the large-scale electrode fabrication, using simply water instead of the toxic and environmentally harmful NMP.

The highly beneficial contribution of phosphoric acid as an additive upon slurry preparation to enable the aqueous processing of oxide cathodes is viable for the high-voltage cathode material, especially LNMO. The phosphoric acid treatment has a two-fold contribution. It (i) lowers the slurry pH in order to successfully prevent the aluminum current collector corrosion, while (ii) simultaneously forming a metal phosphate surface layer, which stabilizes the active material surface and prevents its degradation when being in contact with water. Additionally, the temperature-induced crosslinking of a water-processable cellulose derivative, especially CMC, serving as binding agent, by means of an organic multicarboxylic acid especially citric acid promotes a more stable binder network and substantially enhances the cycling stability. Advantageously, these two approaches are highly complementary and can be beneficially combined to further improve the electrochemical performance of high-voltage cathodes like LNMO.
Since none of the two approaches requires any additional processing step upon electrode preparation, they can be easily implemented in large-scale electrode production for a more environmentally friendly and sustainable lithium-ion battery production.

### Examples

### Electrode preparation

The final electrode composition was 85 wt% LNMO (active material from commercial sources), 10 wt% conductive carbon (C-ENERGY Super C45, TIMCAL), and 5 wt% binder. The latter was either pure sodium carboxymethyl cellulose (CMC,
Walocel CRT 2000 GA 07, degree of substitution 0.7, Dow Wolff Cellulosics) or a 9:1 mixture of CMC and citric acid (CA, 99%, Sigma-Aldrich). For the electrode preparation, CMC (and CA) was (were) dissolved in deionized water to obtain a 2.0 wt% solution. If used, phosphoric acid (PA, ortho-phosphoric acid 85%, >99%, Bernd Kraft) was added to the binder solution prior to the conductive carbon and active material. Subsequently, the conductive carbon Super C45 and the LNMO active material were added. The resulting slurry was homogenized by planetary ball milling for 2h. The obtained slurry was cast on aluminum foil, serving as current collector (thickness: 20 µm; battery grade) with the help of a laboratory doctor blade (wet film thickness of 150 µm). After immediate pre-drying in an atmospheric oven (ED-115, Binder) for 10 min at 80 °C the electrode tapes were dried at room temperature overnight in the dry room. Disc electrodes (geometric area: 1.13 cm²) were punched and pressed at 5 tons for 1 min (Atlas manual hydraulic press, Specac) - also carried out under dry atmosphere. Finally, the electrodes were further dried under a dynamic vacuum at 120 °C for 16 h, or for 14 and 2 h at 120 and 150 °C, respectively, in case of using CA as crosslinking agent. The active material mass loading of the electrodes was in a range of 3.3 to 4.4 mg cm⁻².

The pH measurements were conducted on a Lab 860 pH meter (SI Analytics) equipped with a Blue Line 18 pH electrode (Schott Instruments) at a temperature of 21 ± 2 °C, utilizing the same slurry compositions and preparation parameters and starting from either 20 min after the electrode components dispersion or after 2 h of ball milling as described earlier.

### Electrochemical characterization

Three-electrode Swagelok® cells with lithium metal foil (battery grade, Rockwood Lithium) serving as counter and reference electrodes were used for the electrochemical characterization. The cell assembly was carried out in an argon-filled glove box (MB200B ECO, MBraun; H₂O and O₂ content lower than 0.1 ppm) using glass fiber sheets (Whatman GF/D) as separator, soaked with 130 µL of the electrolyte solution (1M LiPF₆ in ethyl carbonate (EC)/dimethyl carbonate (DMC), 1:1 w/w, Selectilyte LP 30, BASF). Galvanostatic cycling was performed within a potential range from 3.5 V to 4.8 V at 20 ± 2 °C, utilizing a Maccor Battery Tester 4300. An applied dis-/charge rate of 1C corresponds to a specific current of 147 mA g⁻¹ and all potential and voltage values given herein refer to the Li⁺/Li quasi-reference redox couple.

### Structural and Morphological Characterization

Pristine LiNi_{0.5}Mn_{1.5}O₄ (LNMO; <0.5 µm particle size, >99%, Sigma-Aldrich) was studied by X-ray powder diffraction (XRD) using a Bruker D8 Advance diffractometer (Cu K_{α} radiation, λ = 0.154 nm) between 10° ≤ 2θ ≤ 90°, applying a step size of 0.025 (2θ) and a counting time of 2 s per step. The recorded reflections were assigned to the given phases using the ICDD database implemented in the EVA software (Bruker).

Scanning electron microscopy (SEM) of the as-received LNMO active material and the prepared cathode tapes was performed on a Zeiss LEO 1550, equipped with an energy dispersive X-ray (EDX) spectrometer (Oxford Instruments X-MaxN, 50 mm², 15 kV). Using the same microscope, also the surface of the aluminum current collector was investigated after removing the electrode composite coating layer utilizing a carbon-based adhesive tape. Additionally, the electrodes, the thus prepared electrode composite-free aluminum current collector, and the backside of the removed electrode coating, i.e., the side which was next to the aluminum current collector, were investigated by means of EDX. In case of the electrode surface, EDX mapping was performed using an XMax-Xtreme detector (Oxford Instruments, 3 kV) and the AzTec software provided by Oxford Instruments.

The FT-IR measurements were carried out on a Vertex 70v IR spectrometer (Bruker) equipped with a MIR light source, KBr beam splitter, and a deuterated L-alanine doped triglycine sulfate (DLaTGS) detector with a KBr window. The single reflection diamond attenuated total reflection accessory PLATINUM ATR from Bruker was employed for the IR-ATR measurements. The collected spectra were averaged over 64 scans with an optical resolution of 1 cm⁻¹.

*Ex situ* X-ray photoelectron spectroscopy (XPS) measurements of pristine and cycled LNMO electrodes were performed on a PHI 5800 MultiTechnique ESCA System (Physical Electronics) using monochromatized Al Kα radiation (15 kV, 250 W) and Mg Kα radiation (13 kV, 200W) to obtain the Ni 2p and Mn 3s spectra. The spectra were acquired at a detection angle of 45° with a pass energy of 93.90 eV for the survey scans, 29.35 eV for the detailed spectra, and 58.70 eV for the detailed spectra in the Mn 3s region. Sample charging was neutralized with an electron flood gun and XPS spectra were calibrated to the signal of C 1s at 284.6 eV.

The elemental composition of the commercial LNMO powder was determined by inductively coupled plasma optical emission spectrometry (ICP-OES) analysis carried out on a Spectro Arcos spectrometer (Spectro Analytical Instruments).

### Figures

The present invention will be more apparent from the following description of non-limiting specific embodiments with reference to the figures.

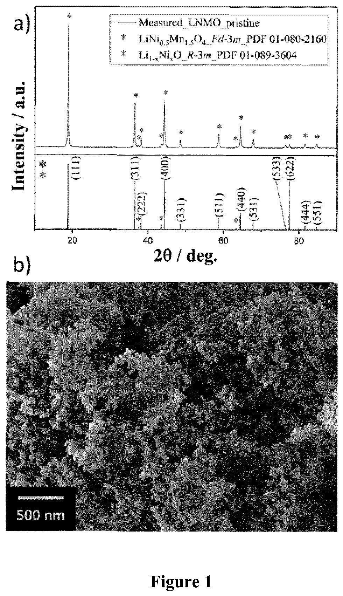

The XRD pattern of the as-received LNMO powder is shown in **Figure 1a****,** revealing the partially disordered LNMO phase (blue stars; space group: *Fd-*3*m*). This assignment is further confirmed by the absence of any superstructure-related reflections at 2θ ≈ 15°, 24°, 35°, 40°, 46°, 47° 58°, 66°, and 75°, typical for the stoichiometric and highly-ordered LNMO spinel phase (space group: *P*4₃32).

At 2θ angles of approximately 38°, 44°, and 63° additional reflections, belonging to a rock-salt-type impurity phase with the space group *R*-3*m*, are present in the pattern (red stars). As we do not know the synthesis conditions for this commercial material, we may assume that these additional reflections are related to the presence of Li₁₋ₓNiₓO impurities with x ≈ 0.85, being introduced when the material is heated to elevated temperatures (above 750 °C) for the final sintering step as a result of the lowered solubility of Ni in the spinel lattice when Mn⁴⁺ is reduced at such temperatures. **Figure 1b** displays the SEM micrograph of the as-received LNMO powder, which is mostly comprised of nano-scale particles, together with few larger crystals. EDX spectroscopy (not shown herein), however, did not reveal any difference in composition for the two rather different particle sizes. Besides, ICP-OES analysis revealed an overall Li:Ni:Mn ratio of 1.00:0.50:1.51, indicating that any present phase impurity does not have a significant effect on the overall elemental composition.

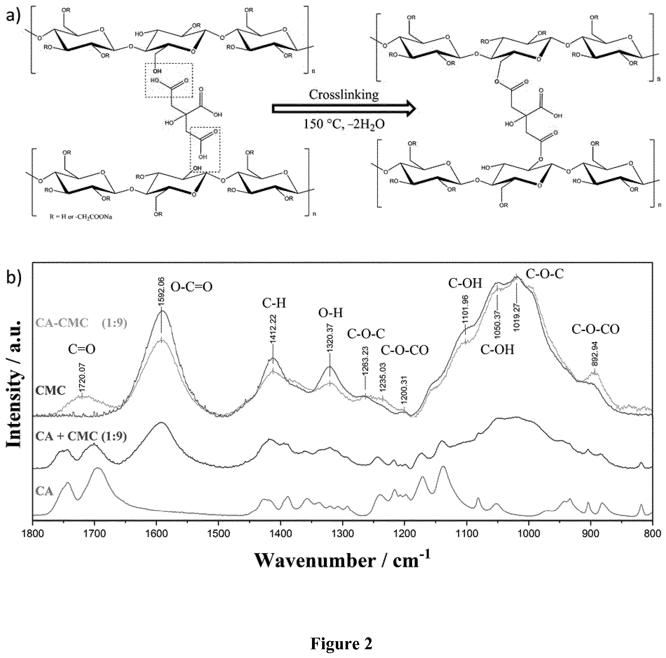

Generally, it has been demonstrated that the disordered LNMO phase shows superior electrochemical performance and rate capability compared with the ordered phase, especially for high surface area porous or nano-sized LNMO - just like the material investigated herein, having a relatively high specific surface area of 15 m² g⁻¹. Nonetheless, such nanostructured electrode materials require a rather large amount of very well dispersed conductive additive and polymer binder, rendering the achievement of mechanically stable electrodes particularly challenging - not least with focus on the aforementioned non-suitability of SBR as co-binding agent for high-voltage cathodes. In an attempt to overcome this issue and stabilize the electrode integrity, we introduced citric acid (CA) into the electrode preparation process, serving as *in situ* crosslinking agent for the CMC chains when drying the electrodes. To follow this crosslinking reaction, which is illustrated in **Figure 2a****,** a series of IR spectra was recorded **(****Figure 2b****),** including the reference spectra of CA, CMC, and a non-crosslinked mixture of CA and CMC (CA+CMC; mass ratio: 1:9). This simple mixture clearly reveals the bands corresponding to the two single compounds without any additional or vanished features. Contrarily, the spectrum of the crosslinked film (CA-CMC), prepared by using the same CA:CMC ratio, but additionally subjected to two heat treatment steps, i.e., for 12 h at 120 °C and 2h at 150 °C, is substantially different. In fact, the new band evolving at 1720 cm⁻¹ is characteristic for the carbonyl stretching vibration of the ester groups originating from the proposed crosslinking esterification reaction of CA and CMC as presented in **Figure 2a****.**

The direct comparison of the normalized spectra of CMC and CA-CMC further confirms the successful crosslinking. As a matter of fact, the intensities of the O-H deformation band at 1320 cm⁻¹ as well as the C-OH stretching of primary (1050 cm⁻¹) and secondary (1102 cm⁻¹) alcohols decrease, indicating that the OH groups of CMC are reacting with the citric acid to form the crosslinking ester bonds. At the same time, the features at 893 cm⁻¹ and from 1200 cm⁻¹ to 1235 cm⁻¹ evolve into more pronounced bands, which we may ascribe to the symmetric and asymmetric C-O-C stretching vibration in saturated aliphatic esters, respectively. The very intense band at 1019 cm⁻¹ remains unchanged and is therefore assigned to the symmetrical C-O-C stretching vibrations either in the glucopyranose monomer itself or in the β-1,4 glycosidic linkages making up the CMC backbone. The corresponding asymmetrical stretching band can be found at 1263 cm⁻¹.

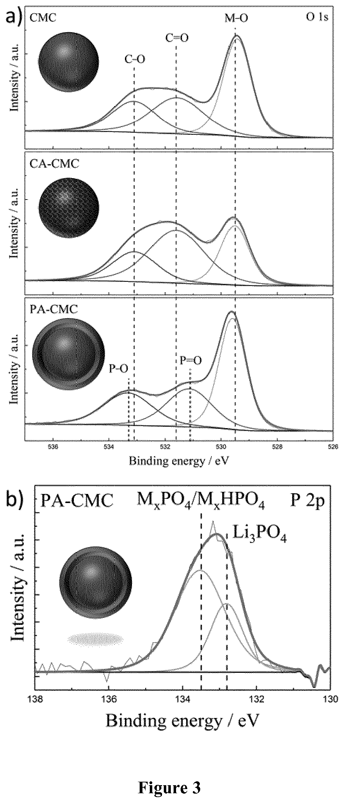

Further confirmation for the formation of the crosslinked binder network can be obtained from the results of XPS analysis performed on fresh electrodes **(****Figure 3**). In the O 1s spectra **(****Figure 3a**), the intensity of the characteristic M-O peak at 529.7 eV, assigned to the Ni-O and Mn-O bonds, is relatively decreased for the CA-crosslinked sample (CA-CMC). Additionally, the signal corresponding to the C=O bond at 531.6 eV appears more intense than the C-O peak at 533.1 eV, when compared to the CMC reference electrodes. Together with the weakened M-O peak, these two features may be ascribed to the ability of CA-crosslinked CMC to homogenously cover the particle surface, i.e., the realization of a homogenous binder film rather than a "string-like" interconnection of the single particles.
Also the electrodes subjected to the treatment with phosphoric acid (PA-CMC) during the slurry preparation, i.e., those prepared by following the second approach, reveal new features for the recorded XPS spectra. While the M-O peak does not show any dramatic change, indicating the absence of a very thick surface layer as a result of the PA addition, the peaks in the C-O and C=O regions are more separated as compared to the other two electrode samples CMC and CA-CMC **(****Figure 3a**). This may be ascribed to the fact that they additionally include a contribution from P-O and P=O bonds, occurring at similar energies, precisely, at 533.2 eV and 531.4 eV, respectively. The corresponding P 2p spectrum **(****Figure 3b**) supports this assignment, showing two peaks related to the presence of Li₃PO₄ (132.8 eV) and MₓPO₄/MₓHPO₄ (∼133.5 eV), for which M can be either Mn or Ni. Considering also the previous study by Loeffler et *al*.,^{[6]} we may thus assign these findings to the formation of highly insoluble metal phosphates at the LNMO particle surface as a result of the addition of PA upon electrode preparation. The latter aspect highlights the great advantage of this approach, since unlike for previous studies^{[9,10]} the application of the interface stabilizing metal phosphate coating layer can be achieved without an additional processing step, hence, saving cost, energy, and time. This *in situ* formation of the highly desirable metal phosphate coating layer was, in fact, more an advantageous "side effect" in the previous investigation reported by Loeffler et *al*.^{[6]} The initial target was to prevent the aluminum current collector corrosion as a result of the increasing pH value related to the lithium leaching as described in **Equation (1) and (2).**

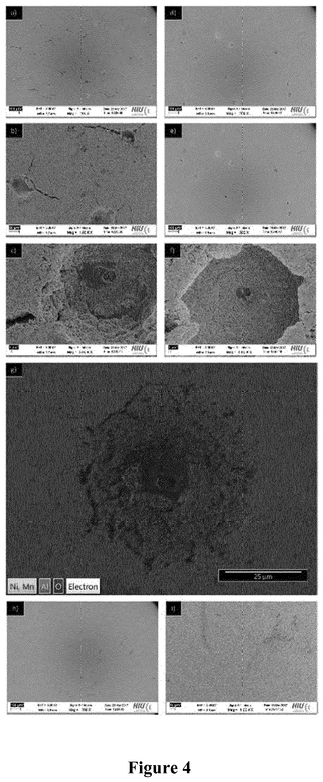

To investigate this corrosion issue for the reference electrodes comprising CMC only, the crosslinked CA-CMC, and those electrodes for which PA was added (PA-CMC), a comparative SEM analysis of the electrodes was conducted **(****Figure 4****).** As expected, the CMC electrodes display relatively large, scattered crater-like holes of around 50 µm in diameter and extended cracks expanding from these holes **(Figure 4a to 4c).** Similarly, though much less pronounced, the CA-CMC electrodes reveal large holes as well, but no significant cracks apart from these **(Figure 4d to 4f).** This less pronounced surface damaging is presumably related to the slightly lower pH value as a result of the CA addition (**Figure S1**) and the enhanced mechanical stability of the coating due to the crosslinking. In both cases, however, these holes reach down to the surface of the current collector as apparent from an elemental EDX mapping of a representative region recorded for CMC electrodes (**Figure 4g** and **Figure S2**). The formation of these holes may be explained in consideration of the aforementioned **Equations 1** and **2,** which describe the aluminum current collector corrosion in high pH regimes (pH > 9), i.e., beyond the stable passivation regime. As a result of the anodic aluminum dissolution, gaseous H₂ is formed, leading to the evolution of large gas bubbles underneath the coating layer. The subsequent electrode drying under vacuum conditions eventually results in the observed craters for CMC and CA-CMC. The presence of aluminum (red) and the proposed corrosion products (Al(OH)₃, purple regions) within these holes is well illustrated by the EDX map acquired for the pristine CMC electrode as shown in **Figure 4g.** At this point, we may note that the same EDX mapping, including additionally the carbon signal, provides insight into the electrode components dispersion and nicely reveals the homogeneous distribution of the conductive carbon, binder, and active material, thus ruling out any potential impact on the observed crater-like holes.

Nonetheless, the aluminum corrosion-induced formation of these holes can be very well prevented, if phosphoric acid is added during the electrode fabrication process, as the pH value of the electrode slurry is kept well in the aluminum passivation regime. In fact, the thus prepared electrodes show a very clean and smooth surface of the coating layer without any indication of electrode cracking or other detrimental changes (Figure 4h to 4i).

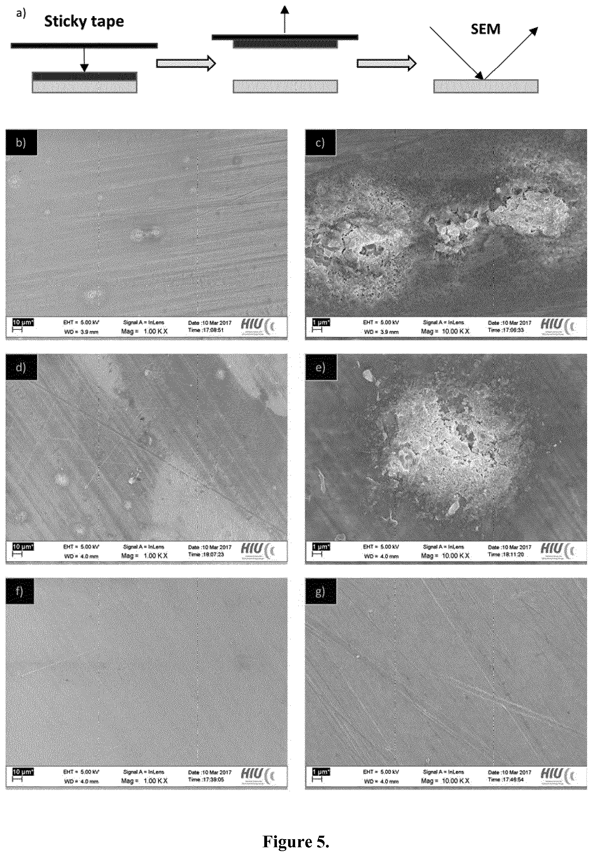

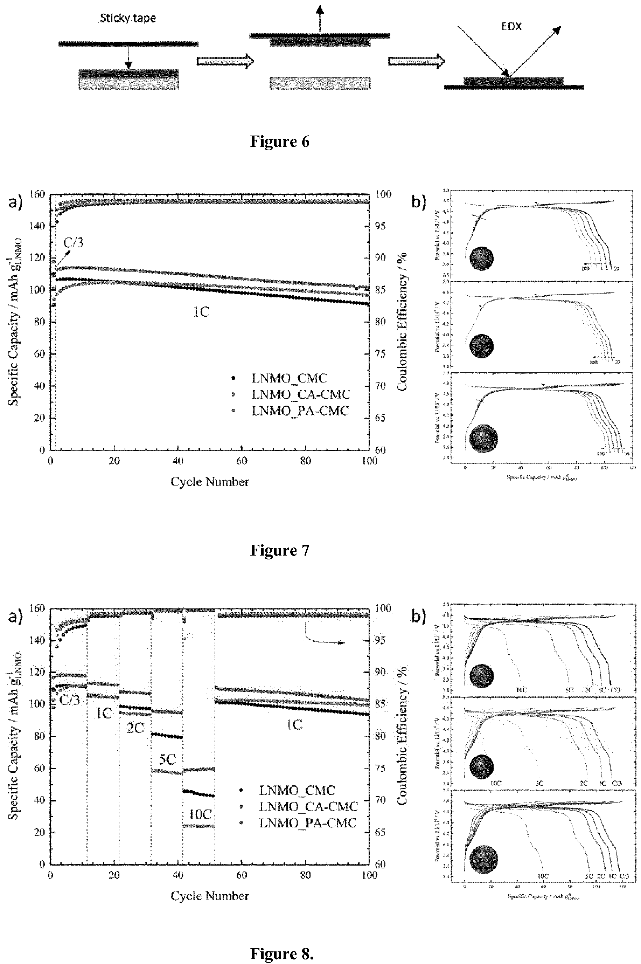

In order to further investigate the corrosion issue for the three different electrode compositions, the surface of the aluminum current collector itself was investigated after carefully removing the electrode coating layer (**Figure 5a**). The results confirm the previous findings presented in **Figure 4****.** While both CMC (**Figure 5b** and 5c) and CA-CMC (**Figure 5d and 5e**) reveal substantial pitting corrosion, the surface of the aluminum current collector in case of PA-CMC (**Figure 5f and 5g**) does not show any difference compared to the pristine aluminum foil used for the electrode fabrication. Additional confirmation is provided by conducting an EDX analysis of the bottom side of the removed electrode coating, performed as schematically illustrated in **Figure 6****.** The findings, summarized in **Table 1**, show that the CMC as well as the CA-CMC electrode coating layers show significant amounts of aluminum of 4.7 wt% and 4.3 wt% in case of CMC and CA-CMC, respectively, resulting from re-deposited corrosion products. For PA-CMC, only traces of aluminum are detected, while the additional detection of small quantities of phosphorous further indicate the formation of the protective phosphate-based surface layer on the LNMO particles.

**Table 1. Summary of the EDX analysis of the bottom side of the electrode coating layer according to Figure 6. The given data are averaged over three different areas for each electrode.**

| | **Element** | | | | | |
|---|---|---|---|---|---|---|
| **Electrode** | **C [wt%]** | **O [wt%]** | **Al [wt%]** | **P [wt%]** | **Mn [wt%]** | **Ni [wt%]** |
| **CMC** | 18.0 ± 1.7 | 34.8 ± 1.1 | 4.7 ± 0.5 | 0.0 ± 0.0 | 31.2 ± 0.5 | 11.3 ± 1.2 |
| **CA-CMC** | 19.5 ± 3.4 | 32.3 ± 3.2 | 4.3 ± 1.0 | 0.0 ± 0.0 | 32.7 ± 4.7 | 11.3 ± 1.9 |
| **PA-CMC** | 17.8 ± 1.2 | 33.7 ± 1.3 | 0.3 ± 0.1 | 0.5 ± 0.1 | 35.4 ± 0.7 | 12.3 ± 0.5 |
| **CP-CMC** | 18.4 ± 2.1 | 33.6 ± 1.9 | 0.2 ± 0.2 | 0.5 ± 0.1 | 33.9 ± 0.8 | 13.41 ± 0.9 |

The electrochemical behavior of the LNMO cathodes made from the three different aqueous slurries is reported in **Figure 7****.** For the first discharge at C/3, the capacity of the CMC electrode (black) is only 110 mAh g⁻¹, whereas it increased to 118 mAh g⁻¹ for PA-CMC (red), indicating a reduced degree of delithiation in contact with water due to the protective phosphate coating, stabilizing the LNMO/electrolyte interface. Subsequently, these two kinds of electrodes show a basically parallel cycling behavior with a slightly higher stability for PA-CMC (**Figure 7a**). The CA-CMC electrode (green) displays the lowest initial capacity of only 101 mAh g⁻¹. Nevertheless, the capacity subsequently increases upon cycling to values exceeding the capacity of the CMC electrodes as a result of the substantially enhanced cycling stability. Accordingly, we may assume that the initially lower capacity is related to wetting issues rather than an initial lithium loss, particularly in light of the earlier discussed formation of a homogeneous binder surface film in case of CA-CMC. However, a contribution of increased lithium leaching during the electrode fabrication due to the presence of CA, as earlier observed in other studies,^{[5]} prior to the thermally induced crosslinking cannot be fully ruled out. With respect to the overall cycling stability, the comparison of the corresponding potential profiles (**Figure 7b**) indicates that the relatively more pronounced decrease in capacity for CMC and PA-CMC largely originates from a shortening of the voltage plateau associated with the nickel redox reaction, indicating that this fading is associated either with the (electronic) loss of active material or a partial active material degradation. The first cycle and average coulombic efficiency, on the other hand, is increasing in the order CMC < CA-CMC < PA-CMC (precisely, 82.57% < 83.83% << 87.24% and 98.67% < 98.87% < 98.94%, for the first cycle and the following cycles, respectively), which is in line with previous reports on the application of metal phosphate coatings to protect the cathode active material against various kinds of chemical attack as, for instance, HF and reduce the oxidative electrolyte decomposition.^{[9,10]} The rate capability test, presented in **Figure 8****,** shows the same trend for these three different electrode compositions, i.e., a constantly higher capacity for PA-CMC and enhanced cycling stability for CA-CMC (**Figure 8a**). Notably, the performance at elevated C rates, particularly for dis-/charge rates of 2C and higher, follows the order CA-CMC < CMC < PA-CMC, revealing a beneficial impact of the thin phosphate coating on the charge transfer, while the crosslinked binder apparently hampers the lithium ion de-/insertion, as also evident from the relatively more pronounced IR drop and internal polarization for CMC and even more pronounced for CA-CMC compared to PA-CMC (**Figure 8b**). This comparably lower rate capability of the CA-CMC electrodes, in fact, further supports the previous conclusion regarding the realization of a homogeneous binder film, covering the LNMO particles.

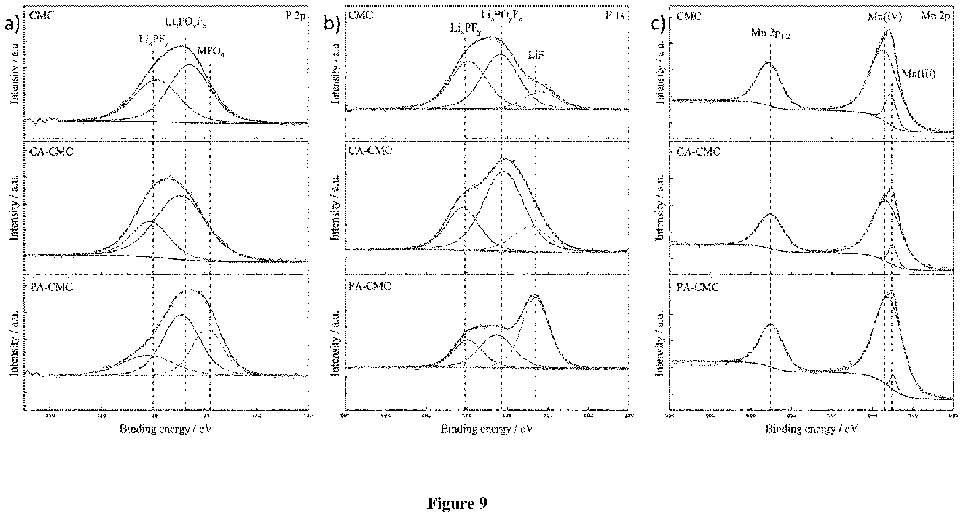

In order to analyze this more in detail, an ex *situ* XPS analysis of the cycled electrodes (100 cycles at 1C as presented in **Figure 7**) was conducted. The results are summarized in **Figure 9****.** Focusing first on the P 2p spectra (**Figure 9a**), the comparison of the three electrodes clearly reveals once more the presence of a metal phosphate surface layer on the PA-CMC cathodes, while in case of CMC and CA-CMC only the peaks corresponding to the formation of LiₓFP_{y} (136.0 eV) and LiₓPO_{y}F_{z} (134.7 eV), assigned to the electrolyte salt decomposition, are observed. Remarkably, the relative intensity of the peak associated with the presence of MPOₓ in case of PA-CMC is of the same order as those corresponding to the electrolyte decomposition products, indicating that the latter process results in the formation of a rather thin layer. This assignment is additionally supported by the analysis of the F 1s spectra, presented in **Figure 9b****.** The surface layer on the PA-CMC electrode is dominated by LiF (684.6 eV), which is known to form a stable, but rather resistive layer on the electrode. Considering the appreciable rate performance of these electrodes, however, this LiF film is supposed to be rather thin. As a matter of fact, this is in line with the quantitative XPS analysis, revealing the lowest F content for these electrodes (**Table S1,** Supporting Information). Being in line with this assignment of a rather thin surface film, as also indicated by the highest first cycle coulombic efficiency, it is found that the PA-CMC electrodes show a reduced amount of meta-stable LiPF₆ decomposition products, i.e., LiₓFP_{y} (688.1 eV) and LiₓPO_{y}F_{z} (686.3 eV), with respect to the other electrodes (**Figure 9b** as well as **Figure 9a**). These findings further highlight the stabilizing and protective nature of the metal phosphate surface layer, substantially hindering the oxidative electrolyte decomposition at the LNMO cathode. The slightly higher contribution of the LiₓPO_{y}F_{z} species in case of CA-CMC compared to CMC (**Figure 9b**) may simply be related to the higher oxygen concentration in presence of the triacidic CA. Eventually, the comparison of the Mn 2p spectra (**Figure 9c**) reveals that both modifications of the standard electrode fabrication process, i.e., the addition of PA as well as the crosslinking via CA, lead to a stabilized cathode/electrolyte interface, indicated by the relatively reduced presence of trivalent manganese - presumably originating from the oxidative electrolyte degradation. This stabilization of the tetravalent manganese oxidation state is supposedly contributing to the improved cycling stability, as it lowers the detrimental effect of Mn disproportionation, yielding Mn²⁺, which can easily dissolve into the electrolyte and migrate to the anode.

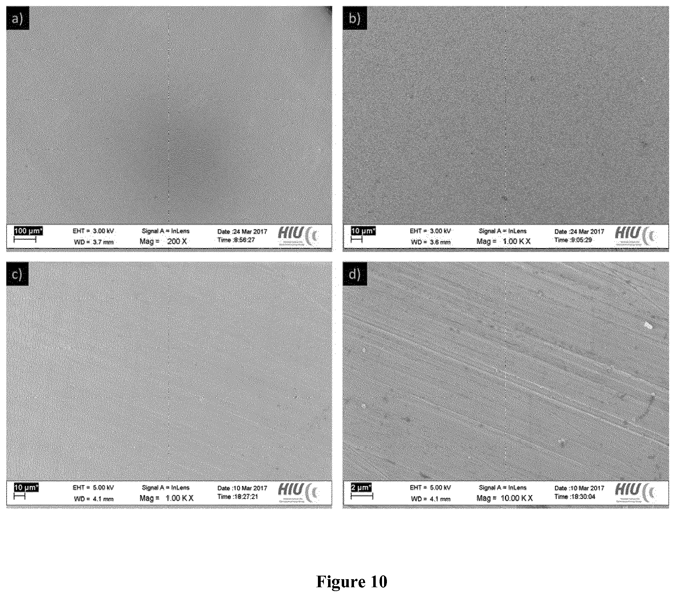

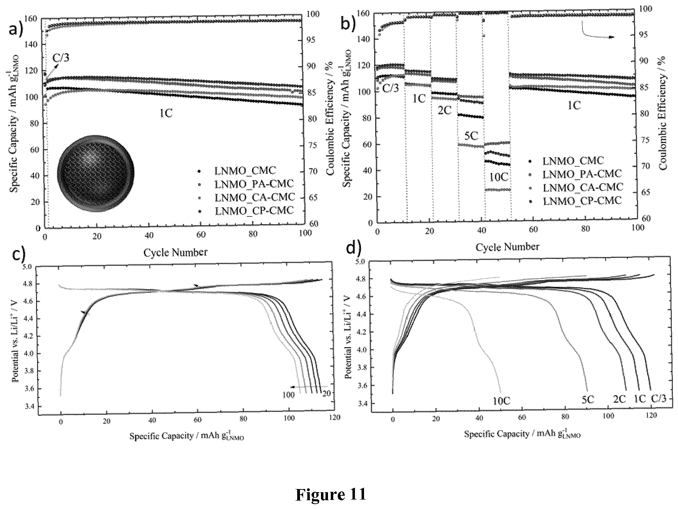

Considering the great and complementary advantages of both approaches to enhance the electrochemical performance of LNMO cathodes, we combined them in a final step, targeting increased capacities (addition of PA) accompanied by an improved cycling stability (CA crosslinking). These electrodes will be referred to as CP-CMC in the following. As expected, they show a very smooth surface when investigated by SEM **(****Figure 10a and 10b****)** and no indication for pitting corrosion of the aluminum current collector after removing the coating layer (**Figure 10c and 10d**), additionally confirmed by means of EDX analysis of the bottom side of the latter (see **Table 1**). The beneficial combination of the two strategies is finally also evidenced by performing the same galvanostatic characterization as carried out earlier for the other three electrode compositions, comparatively presented in **Figure 11****.** The CP-CMC electrodes do not only reveal the high specific capacity of PA-CMC (i.e., 117 mAh g⁻¹ in the first cycle), but moreover the enhanced cycling stability as observed for CA-CMC **(****Figure 11a****).** Remarkably, the first cycle and average coulombic efficiency is further increased to 87.51% and 98.96%, respectively, while the rate capability is slightly lower compared to PA-CMC at the maximum applied dis-/charge rates of 5C and 10C, but far improved with respect to CA-CMC **(****Figure 11b****).** The latter slight drawback, however, is very well counterbalanced by the substantially stabilized capacity retention, as observed when subsequently decreasing the C rate to 1C again, and future progress in optimizing the overall electrode composition in terms of the active material, binder, and conductive carbon ratio may result in a further enhancement of the power performance of these high-voltage LNMO cathodes.

### References

[1] A. Manthiram, J. B. Goodenough, Can. J. Phys. 1987, 65, 1309-1317.
[2] X. Zhang, W. J. Jiang, X. P. Zhu, A. Mauger, Qilu, C. M. Julien, J. Power Sources 2011, 196, 5102-5108.
[3] T. Tanabe, T. Gunji, Y. Honma, K. Miyamoto, T. Tsuda, Y. Mochizuki, S. Kaneko, S. Ugawa, H. Lee, T. Ohsaka, et al., Electrochim. Acta 2016, 224, 429-438.
[4] I. Doberdò, N. Löffler, N. Laszczynski, D. Cericola, N. Penazzi, S. Bodoardo, G. T. Kim, S. Passerini, J. Power Sources 2014, 248, 1000-1006.
[5] N. Raza, Z. I. Zafar, M. Najam-Ul-Haq, Hydrometallurgy 2014, 149, 183-188.
[6] (a) N. Loeffler, G. T. Kim, F. Mueller, T. Diemant, J. K. Kim, R. J. Behm, S. Passerini, ChemSusChem 2016, 9, 1112-1117; (b) WO2015/062985 A1, G.-T. Kim, N. Loeffler, I. Doberdo, N. Laszczynski, D. Bresser, S. Passerini - Method for producing an electrode for a lithium-ion battery.
[7] Q. Pang, X. Liang, C. Y. Kwok, J. Kulisch, L. F. Nazar, Adv. Energy Mater. 2016, 1601630.
[8] J. Song, Z. Yu, M. L. Gordin, X. Li, H. Peng, D. Wang, ACS Nano 2015, 9, 11933-11941.
[9] F. Cheng, J. Chen, H. Zhou, A. Manthiram, J. Electrochem. Soc. 2013, 160, A1661-A1667.
[10] J. Cho, Y.-W. Kim, B. Kim, J.-G. Lee, B. Park, Angew. Chemie Int. Ed. 2003, 42, 1618-1621.

## Claims

1. A method for preparing an electrode material for lithium-ion batteries comprising the process steps of
a) preparing an aqueous solution of an alkali metal cellulose derivate comprising at least one hydroxyl and/or at least one carboxylate group per repeating unit or an alkali metal alginate,
b) adding an organic multicarboxylic, at least an organic dicarboxylic acid to the aqueous solution,
c) adding phosphoric acid (H₃PO₄) or diphosphoric acid (H₄P₂O₇) or triphosphoric acid (H₅P₃O₁₀) or a mixture thereof to the aqueous solution,
d) adding a conductive additive and an active material comprising lithium and
e) extracting the obtained slurry.

2. A method for preparing an electrode material for lithium-ion batteries according to claim 1 **characterized in that** the alkali metal is lithium or sodium and the cellulose derivative is carboxymethyl cellulose.

3. A method for preparing an electrode material for lithium-ion batteries according to claim 1 or 2 **characterized in that** the organic multicarboxylic acid is taken from the list malonic acid, succinic acid, glutaric acid, aconitic acid, citric acid, propane-1,2,3-tricarboxylic acid, or biphenyl-3,3',5,5'-tetracarboxylic acid.

4. A method for preparing an electrode material for lithium-ion batteries according to claim 3 **characterized in that** the organic multicarboxylic acid is citric acid.

5. A method for preparing an electrode material for lithium-ion batteries according to one of the claims 1 to 4 **characterized in that** during the process step c) phosphoric acid (H₃PO₄) is added.

6. A method for preparing an electrode material for lithium-ion batteries according to one of the claims 1 to 5 **characterized in that** the conductive additive is conductive carbon or a metal.

7. A method for preparing an electrode material for lithium-ion batteries according to one of the claims 1 to 6 **characterized in that** the active material comprising lithium is a transition metal oxide.

8. A method for preparing an electrode material for lithium-ion batteries according to claim 7 **characterized in that** the lithium transition metal oxide is LiNiₓMn₂₋ₓO₄ with x ≤ 0.5 or LiNiₓCo_{y}Mn_{z}M_{q}O2 or Li₂MnO₃^{∗}LiNiₓCo_{y}Mn_{z}M_{q}O₂ with x ≤ 1, y ≤ 1, and z ≤ 1; q ≤ 0.2; x + y + z + q = 1 and M = Al, B, Mg, Ca, Ti, Cr, V, Fe, Cu, Zn, Zr, Nb, preferably LiNi_{0,5}Mn_{1,5}O₄ (LNMO) .

9. A method for preparing an electrode material for lithium-ion batteries according to one of the claims 1 to 8 **characterized in that** the ratio from the alkali metal cellulose derivate to the organic multicarboxylic acid is in the range of 7:3 to 99:1.

10. A method for preparing an electrode material for lithium-ion batteries according to claim 9 **characterized in that** the ratio from the alkali metal cellulose derivate to the organic multicarboxylic acid is 9:1.

11. A method for preparing an electrode for lithium-ion batteries comprising the steps
A) preparing a slurry according to the method of one of the claims 1 to 10
B) depositing the slurry on a current collector to obtain an electrode
C) drying the electrode.

12. A method for preparing an electrode for lithium-ion batteries according to claim 11 **characterized in that** during step C) the drying temperature is between 120°C and 170°C.

13. Aqueous dispersion for preparing an electrode material for lithium-ion batteries comprising an active material comprising lithium, a conductive additive, phosphoric acid (H₃PO₄) or diphosphoric acid (H₄P₂O₇) or triphosphoric acid (H₅P₃O₁₀) or a mixture thereof, an organic multicarboxylic acid and an alkali metal cellulose derivative or alkali metal alginate as a binder.

14. Electrode for a lithium-ion battery prepared by the method according to claim 11 or 12.

15. Lithium-ion battery comprising an electrode according to claim 14.

## Patentansprüche

1. Verfahren zur Herstellung eines Elektrodenmaterials für Lithium-Ionen Batterien umfassend die Verfahrensschritte
a) Bereitstellen einer wässrigen Lösung eines Alkalimetall-Cellulose-Derivats umfassend mindestens eine Hydroxygruppe und/oder mindestens eine Carboxygruppe pro Wiederholeinheit oder ein Alkalimetall-Alginat,
b) Hinzufügen eine organische Multicarbonsäure, mindestens eine organisch Dicarbonsäure zu der wässrigen Lösung,
c) Hinzufügen von Phosphorsäure (H₃PO₄) oder Diphosphorsäure (H₄P₂O₇) oder Triphosphorsäure (H₅P₃H₁₀) oder einer Mischung davon zu der wässrigen Lösung,
d) Hinzufügen eines leitfähigen Additivs und eines Aktivmaterials umfassend Lithium und
e) Entnehmen der wässrigen Masse.

2. Verfahren zur Herstellung eines Elektrodenmaterials für Lithium-Ionen-Batterien nach Anspruch 1, wobei das Alkalimetall Lithium oder Natrium ist und das CelluloseDerivat Carboxymethylcellulose ist.

3. Verfahren zur Herstellung eines Elektrodenmaterials für Lithium-Ionen-Batterien nach einem der Ansprüche 1 oder 2, wobei die organische Multicarbonsäure aus der Liste {Malonsäure, Bernsteinsäure, Glutarsäure, Aconitsäure, Zitronensäure, Propan-1,2,3-tricarbonsäure oder Biphenyl-3,3',5,5'-tetracarbonsäure} entnommen ist.

4. Verfahren zur Herstellung eines Elektrodenmaterials für Lithium-Ionen-Batterien nach einem der Ansprüche 1 bis 3, wobei die organische Multicarbonsäure Zitronensäure ist.

5. Verfahren zur Herstellung eines Elektrodenmaterials für Lithium-Ionen-Batterien nach einem der Ansprüche 1 bis 4, wobei während des Prozessschrittes c) Phosphorsäure' (H₃PO₄) hinzugefügt wird.

6. Verfahren zur Herstellung eines Elektrodenmaterials für Lithium-Ionen-Batterien nach einem der Ansprüche 1 bis 5, wobei das leitfähige Additiv leitfähiger Kohlenstoff oder ein Metall ist.

7. Verfahren zur Herstellung eines Elektrodenmaterials für Lithium-Ionen-Batterien nach einem der Ansprüche 1 bis 6, wobei das Aktivmaterial umfassend Lithium ein Übergangsmetalloxid ist.

8. Verfahren zur Herstellung eines Elektrodenmaterials für Lithium-Ionen-Batterien nach Anspruch 7, wobei das Lithium Übergangsmetalloxid LiNiₓMn₂₋ₓO₃ mit x ≤ 0.5 oder LiNiₓCo_{y}Mn_{z}M_{q}O2 oder Li₂MnO₃^{∗}LiNiₓCo_{y}Mn_{z}M_{q}O₂ mit x ≤ 1, y ≤ 1 und z ≤ 1; q ≤ 0.2; x + y + z + q = 1 und M = Al, B, Mg, Ca, Ti, Cr, V, Fe, Cu, Zn, Zr, Nb, bevorzugt LiNi_{0,5}Mn_{0,5}O₄ (LNMO) .

9. Verfahrenzur Herstellung eines Elektrodenmaterials für Lithium-Ionen-Batterien nach einem der Ansprüche 1 bis 8, wobei das Verhältnis von dem Alkalimetall-Cellulose-Derivats zur organischen Multicarbonsäure ist im Bereich zwischen 7:3 und 99: 1 .

10. Verfahren zur Herstellung eines Elektrodenmaterials für Lithium-Ionen-Batterien nach Anspruch, wobei das Verhältnis von dem Alkalimetall-Cellulose-Derivats zur organischen Multicarbonsäure ist im Bereich zwischen 9:1.

11. Verfahren zur Herstellung einer Elektrode für Lithium-Ionen-Batterien umfassend die Verfahrensschritte
A) Bereitstellen einer wässrigen Masse nach dem Verfahren nach einem der Ansprüche 1 bis 10,
B) Aufbringen der wässrigen Masse auf einen Stromableiter, um eine Elektrode zu erhalten,
C) Trocknen der Elektrode.

12. Verfahren zur Herstellung einer Elektrode für Lithium-Ionen-Batterien nach Anspruch 11, wobei während Verfahrensschritt C) die Trocknungstemperatur zwischen 120°C und 170°C beträgt.

13. Wässrige Dispersion zur Herstellung eines Elektrodenmaterials für Lithium-Ionen-Batterien umfassend ein Aktivmaterial umfassend Lithium, ein leitfähiges Additiv, Phosphorsäure (H₃PO₄), Diphosphorsäure (H₄P₂O₇) oder Triphosphorsäure (H₅P₃O₁₀) oder eine Mischung daraus, eine organische Multicarbonsäure und eine Alkalimetall-CelluloseDerivat oder eine Alkalimetall-Alginat als Bindemittel.

14. Elektrode für eine Lithium-Ionen Batterie hergestellt durch das Verfahren nach Anspruch 11 oder 12.

15. Lithium-Ionen Batterie umfassend eine Elektrode nach Anspruch 14.

## Revendications

1. Procédé de préparation d'un matériau d'électrodepour batteries lithium-ion comprenant les étapes de procédé suivantes consistant à:
a) préparer une solution aqueuse d'un dérivé de cellulose de métal alcalin comprenant au moins un groupe hydroxy et/ou au moins un groupe carboxyle par motif récurrent ou un alginate de métal alcalin,
b) ajouter un acide organique multicarboxylique, au moins dicarboxylique, à la solution aqueuse,
c) ajouter de l'acide phosphorique (H₃PO₄) ou de l'acide diphosphorique (H₄P₂O₇) ou de l'acide triphosphorique (H₅P₃O₁₀) ou un mélange de ceux-ci à la solution aqueuse,
d) ajouter un additif conducteur et un matériau actif comprenant du lithium et
e) extraire la masse aqueuse obtenue.

2. Procédé de fabrication d'un matériau d'électrode pour batteries lithium-ion selon la revendication 1 **caractérisé en ce que** le métal alcalin est du lithium ou du sodium et que le dérivé de cellulose est de la carboxyméthylcellulose.

3. Procédé de fabrication d'un matériau d'électrode pour batteries lithium-ion selon la revendication 2 ou 3 **caractérisé en ce que** l'acide organique multicarboxylique est l'acide malonique, l'acide succinique, l'acide glutarique, l'acide aconitique, l'acide citrique, l'acide propane-1,2,3-tricarboxylique, ou l'acide biphényl-3,3',5,5'-tétracarboxylique.

4. Procédé de fabrication d'un matériau d'électrode pour batteries lithium-ion selon la revendication 3 **caractérisé en ce que** l'acide organique multicarboxylique est l'acide citrique.

5. Procédé de fabrication d'un matériau d'électrode pour batteries lithium-ion selon l'une quelconque des revendications 1 à 4 **caractérisé en ce que** pendant l'étape de procédé c) l'acide phosphorique (H₃PO₄) est ajouté.

6. Procédé de fabrication d'un matériau d'électrode pour batteries lithium-ion selon l'une quelconque des revendications 1 à 5 **caractérisé en ce que** l'additif conducteur est du carbone ou un métal.

7. Procédé de fabrication d'un matériau d'électrode pour batteries lithium-ion selon l'une quelconque des revendications 1 à 6 **caractérisé en ce que** le matériau actif comprenant du lithium est un oxyde de métal de transition.

8. Procédé de fabrication d'un matériau d'électrode pour batteries lithium-ion selon la revendication 7 **caractérisé en ce que** l'oxyde de métal de transition comprenant du lithium est LiNiₓMn₂₋ₓO₃ avec x ≤ 0.5 ou LiNiₓCo_{y}Mn_{z}M_{q}O2 ou Li₂MnO₃^{∗}LiNiₓCo_{y}Mn_{z}M_{q}O₂ avec x ≤ 1, y ≤ 1 et z ≤ 1; q ≤ 0.2; x + y + z + q = 1 et M = Al, B, Mg, Ca, Ti, Cr, V, Fe, Cu, Zn, Zr, Nb, de préférence LiNi_{0,5}Mn_{0,5}O₄ (LNMO) .

9. Procédé de fabrication d'un matériau d'électrode pour batteries lithium-ion selon l'une quelconque des revendications 1 à 8 **caractérisé en ce que** le rapport entre le dérivé de cellulose de métal alcalin et l'acide organique multicarboxylique est compris entre 7:3 et 99:1.

10. Procédé de fabrication d'un matériau d'électrode pour batteries lithium-ion selon la revendication 1 à 9 **caractérisé en ce que** le rapport entre le dérivé de cellulose de métal alcalin et l'acide organique multicarboxylique est de 9:1.

11. Procédé de fabrication d'une électrode pour batteries lithium-ion comprenant les étapes consistant à
A) préparer une masse aqueuse selon le procédé selon l'une quelconque des revendications 1 à 10
B)déposer la masse aqueuse sur un collecteur de courant pour obtenir une électrode
C) sécher l'électrode.

12. Procédé de fabrication d'un matériau d'électrode pour batteries lithium-ion selon la revendication 11 **caractérisé en ce que** pendant l'étape C) la température de séchage est comprise entre 120°C) et 170°C.

13. Dispersion aqueuse pour le fabrication d'un matériau d'électrode pour batteries lithium-ion comprenant un matériau actif comprenant du lithium, un additif conducteur, de l'acide phosphorique (H₃PO₄) ou de l'acide diphosphorique (H₄P₂O₇)ou de l'acide triphosphorique (H₅P₃O₁₀) ou un mélange de ceux-ci, un acide organique multicarboxylique et un dérivé de cellulose de métal alcalin ou un alginate de métal alcalin en tant que liant.

14. Electrode pour une batterie lithium-ion préparé selon le procédé selon la revendication 11 ou 12.

15. Batterie lithium-ion comprenant une électrode selon la revendication 14.
